# EUROPEAN PATENT SPECIFICATION

(11) **EP 3 575 075 B1**
(45) Date of publication and mention of the grant of the patent: **07.06.2023**
(21) Application number: 18745222.2
(22) Date of filing: 29.01.2018
(51) Int. Cl.: B32B 3/30, B32B 5/18, B32B 27/00, B32B 27/32, B32B 27/34, B32B 27/36, B65D 65/40, B32B 3/26, B32B 7/023, B32B 27/06, B32B 27/08, B32B 27/20

(54) **DECORATED LAMINATED FILM, AND BAG-SHAPED CONTAINER AND SEALING MATERIAL HAVING DECORATED LAMINATED FILM**
DEKORIERTE LAMINIERTE FOLIE UND BEUTELFÖRMIGER BEHÄLTER UND DICHTUNGSMATERIAL MIT DEKORIERTER LAMINIERTER FOLIE
FILM STRATIFIÉ DÉCORÉ, ET RÉCIPIENT EN FORME DE SAC ET MATÉRIAU D'ÉTANCHÉITÉ AYANT UN FILM STRATIFIÉ DÉCORÉ

(30) Priority: 30.01.2017 JP 2017014329; 06.02.2017 JP 2017019635
(43) Date of publication of application: 04.12.2019
(73) Proprietor: Toyo Seikan Co., Ltd., Tokyo 141-8640 (JP); Toyo Seikan Group Holdings, Ltd., Shinagawa-ku Tokyo 141-8627 (JP)
(72) Inventor: YASUUMI, Takahiro, Yokohama-shi, Kanagawa 230-0001 (JP); ISHIZAKA, Koichi, Yokohama-shi, Kanagawa 230-0001 (JP); OTANI, Yoshihiro, Tokyo 141-8627 (JP); MORITA, Yosuke, Tokyo 141-8627 (JP)
(74) Representative: J A Kemp LLP
(86) International application number: PCT/JP2018/002623
(87) International publication number: WO 2018/139625

(56) References cited:
- WO-A1-2017/022527
- WO-A1-2017/130792
- JP-A- 2000 033 660
- JP-A- 2001 113 664
- JP-A- 2008 137 343
- JP-A- 2009 172 998
- JP-A- 2014 046 655
- JP-U- H0 728 068
- JP-U- S53 161 985
- US-A- 4 499 126
- DATABASE WPI Week 201154 Thomson Scientific, London, GB; AN 2011-K11041 XP002799390, & JP 2011 154175 A (TOPPAN PRINTING CO LTD) 11 August 2011 (2011-08-11)
- DATABASE WPI Week 200953 Thomson Scientific, London, GB; AN 2009-M19061 XP002799391, & JP 2009 172998 A (YOSHINO KOGYOSHO KK) 6 August 2009 (2009-08-06)

## Description

### Technical Field:

The present invention relates to a decorative laminate film on which a character and/or a figure is formed as a protruded portion. More specifically, the present invention relates to a decorative laminate film with an excellent design property where three-dimensionality of the character and/or the figure is emphasized by a metallic luster derived from a print layer comprising high-brightness ink or a pearly luster derived from a foamed film. The present invention further relates to a bag-type container and a sealing material each having the decorative laminate film.

### Background Art:

Bag-type containers such as pouches are filled with semifluid or fluid contents like food, beverages and detergents, and sealing materials are used as closures for cup-like or tray-like containers. It is required that such containers and sealing materials be arranged with characters/letters to indicate the product name or the like together with various figures for the purpose of differentiate their products from products of other manufactures or enhancing the product value. For satisfying the requirements, the characters and/or the figures may be emphasized by, for instance, making them three-dimensional.

For instance, Patent document 1 below proposes a bag-type container having an embossed pattern. The embossed pattern is formed by heating a protruded portion formed in accordance with the embossed pattern to a predetermined temperature, thereby bringing the protruded portion into contact with a surface of a soft packaging material to partly shrink the soft packaging material, so that the soft packaging material may swell outward to form an embossed pattern. In this embossed bag-type container, an embossed pattern having a texture different from that of a printed pattern is formed on the bag-type container. However, the combination of the emboss and the print is insufficient to provide a synergy effect. As a result, satisfactory effect cannot be obtained from the viewpoint of a design property.

Patent document 2 below proposes a laminate film formed by laminating a plurality of films different from each other in the thermal expansion coefficients. The laminate film is pressed with a heated mold of a character or a mark so that the film may be swollen to have the shape of the mold. Alternatively, a laminate film is produced by transferring a foil with a shape of the mold to a laminate film and also swelling the film. In this laminate film, it is possible to swell the character or mark itself and form a three-dimensional character or mark.

Patent document 3 concerns a plastic card having a metallic luster and a relief pattern comprising a pair of metal-luster plastic sheets containing a metal-luster pigment, a colored plastic sheet provided between the metal-luster sheets, a printed ink layer provided on the outer surface of one of the metal-luster sheets, and transparent plastic sheets respectively laminated on the outer surfaces of the metal-luster sheets, a relief pattern of concavities and convexities of a shape corresponding to the printed ink layer being formed on the surface of the metal-luster sheet opposite that on which the printed ink layer is provided. A magnetic stripe may be further provided on an outer surface of the card.

Patent document 4 concerns an information display panel which has light transmissivity in portions of various letters or figures drawn by printing or the like while having metallic glossiness and in which electrostatic charge due to a support is restrained. A metal deposited layer and an antioxidant layer are layered on one surface of the support and a picture pattern layer is layered on the other surface of the support wherein the metal deposited layer is not formed in the portion corresponding to a picture pattern of the picture pattern layer and the portion has light transmissivity. An antistatic layer is layered on the picture pattern layer.

Patent document 5 concerns a constitution for decoration capable of realizing a uneven pattern formed on a molded article in a more three-dimensional and high grade visual effect. In the document, a printed coated film is formed by using a printer with on-demand printing function on a given region on back side of a transparent substrate made of a synthetic resin, an uneven pattern is formed by using a formed part and a nonforming part of the printed coated film, furthermore a decorative layer with a reflecting face on the backside of the substrate or a decorating member is arranged as laminated in a region containing a forming part and nonforming part on the back side of the substrate, or a pattern is formed by an etched concave part formed like engraved leaving the flat part on circumference and then a pattern is formed by engraved concave. The first decorating layer is made by forming a printed film with an on-demand printer on a flat part removing the etched concavity in a given region.

Patent document 6 is concerned with obtaining an excellent three-dimensional feeling and metal appearance by providing an expanded layer containing a thermoplastic resin and thermally expansible microcapsules, a metal layer and a primer layer in this order. The document relates to a decorative sheet that contains an expanded layer containing thermally expansible microcapsules (microcapsules foamed by heating and projected parts are formed), a metal layer and a primer layer. When the decorative sheet is looked centering around a transparent support layer, it is constituted of the transparent layer and the primer layer, metal layer, expanded layer containing the thermally expansible microcapsules and self-adhesive layer successively laminated on the support. Release paper is provided to the self-adhesive layer on the side opposite to the expanded layer. A clear layer is provided on the surface of the support layer (the observation side of the decorative sheet).

Patent document 7 concerns a metallic luster film which can represent unique metallic colors having unconventional appearance of depth by generating no unevenness, variation in tone of colors, and peeling or the like in the interface on a surface of a packaging container, and to aims to provide a sheet for thermoforming formed by the metallic luster film and the packaging container formed by the sheet for thermoforming. The metallic luster film is formed by making a colored layer overlie one side of a transparent film by interposing a metallic luster layer having a light transmission property. The sheet for thermoforming is formed by making the metallic luster film overlie at least one side of a thermoplastic resin sheet so that a side having the metallic luster layer and the colored layer contacts with the thermoplastic resin film. The packaging container is formed by thermoforming the sheet for thermoforming.

Patent document 8 concerns a decorative laminated film in which a printed pattern and protrusions that protrude from an outer film side are formed on a laminated film comprising at least an inner surface film and an outer surface film, the decorative laminated film being characterized in that the protrusions are positioned on or in the vicinity of the printed pattern, and the contour of the printed pattern is blurred. The printed pattern and the protrusions are easily aligned, giving the decorative laminated film superior productivity. Even if the positioning of the protrusions is slightly misaligned, the design of the decorative laminated film will not be compromised. The decorative laminated film has an improved design due to the gradation effect of the printed pattern on the protrusions and the vicinity thereof.

### Prior Art Documents:

### Patent Documents:

Patent Document 1: JP 4370768
Patent Document 2: JP 5150433
Patent Document 3: US 4499126
Patent Document 4: JP 2011 154175
Patent Document 5: JP 2009 172998
Patent Document 6: JP 2000 033660
Patent Document 7: JP 2008 137343
Patent Document 8: WO 2017/130792

### Summary of the Invention:

### Problems to be solved by the invention:

In the aforementioned methods of Patent documents 1 and 2, a laminate film comprising a plurality of films different from each other in the thermal expansion coefficients is heat-pressed to make the laminate film partly swell, thereby imparting three-dimensionality to the character and/or the mark. Even by these methods, the decorative effect provided by the swelling still may not be fully satisfactory. When the area or the amount of the swelling is increased to enhance the decorative effect, the thickness of the film arranged inside may be decreased partly to make it difficult to maintain the material strength or the barrier property. As a result, properties for protecting and preserving contents cannot be maintained, and thus, the packaging material is not suitable for practical use.

Therefore, an object of the present invention is to provide a decorative laminate film with an excellent design property. The film is decorated by a print design and a protruded portion having a metallic luster or a pearly luster while its functions for a packaging material is not impaired.

Another object of the present invention is to provide a bag-type container and a sealing material, both of which have three-dimensionally emphasized characters and/or figures, and are designed to have an excellent design property.

### Means for solving the problems:

The present invention relates to a decorative laminate film. It includes a laminate film including at least an inner film and an outer film, and at least a part of a character and/or a figure is formed as a protruded portion protruding toward the outer film. The inner film of the laminate film includes polyethylene or polypropylene, and the outer film includes stretched nylon or stretched polyethylene terephthalate. Between the inner film and the outer film, a print layer of a high-brightness ink and/or a foamed film having a pearly luster is provided, and at least a part of the character and/or the figure has a metallic luster derived from the print layer of the high-brightness ink or the pearly luster derived from the foamed film. The character and/or the figure is distinguished from at least a part of the remaining region in at least one of hue, brightness, chroma and gloss, and the protruded portion is formed along at least a part of the character and/or the figure.

It is preferable in the decorative laminate film of the present invention that:
1. the character and/or the figure has a contrast to the remaining region and the protruded portion is formed on a relatively bright region;
2. a print to emphasize a shadow is provided to the region to be shaded when the protruded portion is irradiated with light from one direction;
3. the protruded portion is formed along the outline of the character and/or the figure;
4. the print layer including the high-brightness ink includes a high-brightness ink containing an aluminum powder or a high-brightness ink containing a pearl pigment;
5. the foamed film is a thermoplastic resin film impregnated with an inert gas, heated and stretched;
6. the protruded portion has a height in a range of 0.1 to 0.35 mm and a width of not more than 10 mm; and
7. the protruded portion is formed by compressing a laminate film in a cold, warm or hot process to make the laminate film protrude toward the outer film.

Further, the present invention provides a bag-type container including the decorative laminate film.

Further, the present invention provides a sealing material including the decorative laminate film.

Hereinafter, the "character and/or figure" may be expressed as "pattern" or "print design" (in this description, the term "letter" may include a character, and the term "character" may include a letter).

### Effects of the invention:

In the decorative laminate film of the present invention, patterns formed by a combination of a print and a protruded portion has a metallic luster derived from a print layer comprising a high-brightness ink or a pearly luster derived from a foamed film. The metallic luster or the pearly luster serves to remarkably emphasize the protruded portion. Furthermore, at least one of the hue, the brightness, the chroma and the gloss of the pattern is differentiated from that of the remaining region, and thus, the pattern is clearly distinguished from the background, and the three-dimensionality is enhanced. When combined with the protruded portion formed along at least a part of the character or the figure, these effects can improve remarkably the decorative effect in comparison with a conventional decoration imparted by partly swelling the laminate film.

The pattern can be formed by printing with the high-brightness ink. Therefore, when forming various three-dimensional patterns having a metallic luster on a transparent or semitransparent (hereinafter, both may be expressed as "transparent") laminate film, the pattern is provided on the packaging material such as a bag-type container and sealing material, thereby providing a packaging container with an excellent design property while allowing the content to be visible.

In a case of using the foamed film, since the foamed film itself is semitransparent, the design property of the packaging material can be improved together with improvement in the visibility of the content.

An ink containing a pearl pigment may be called pearl ink. In the present specification, the high-brightness ink may include a pearl ink, and a metallic luster may include a pearly luster derived from the pearl ink.

As described above, the pattern in the present invention has a metallic luster derived from a print layer comprising a high-brightness ink and/or a pearly luster derived from a foamed film. Preferably, the protruded portion is effectively emphasized further by the hue, the brightness, the chroma, the gloss or the like. As a result, there is no necessity of increasing the height and width of the protruded portion. Moreover, when a packaging material such as a bag-type container or a sealing material is made of the decorative laminate film, the packaging material shows good resistance to breakage caused by dropping and deterioration in the barrier property, and it can exhibit excellent mechanical strength and barrier property.

By using a laminate film including a more stretchable film on the inner surface and a less stretchable film on the outer surface, the protruded portion can be shaped to protrude in any of cold, warm and hot processes, i.e., the shaping ability is also excellent.

Further, the base at the print region (character or background) is printed in white to make this part opaque. Alternatively, it can be made semitransparent if the white print on the base is removed, thereby improving the design property while maintaining the visibility of content.

The aforementioned effects of the present invention are demonstrated from the results of Examples described below.

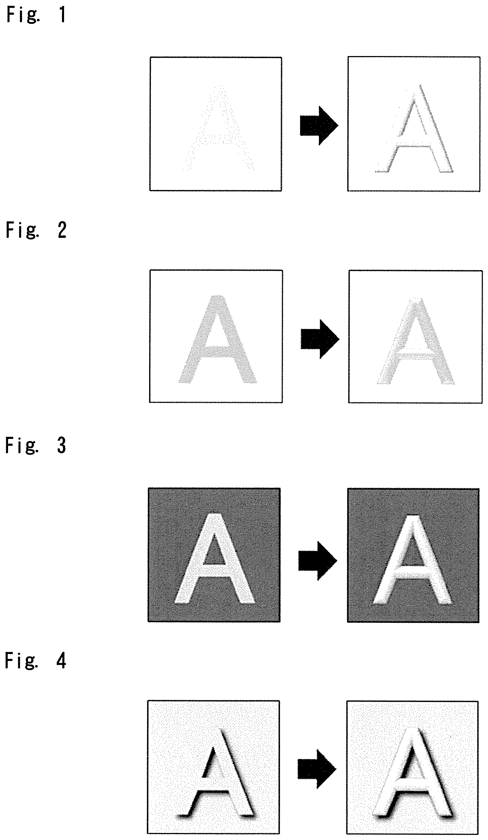

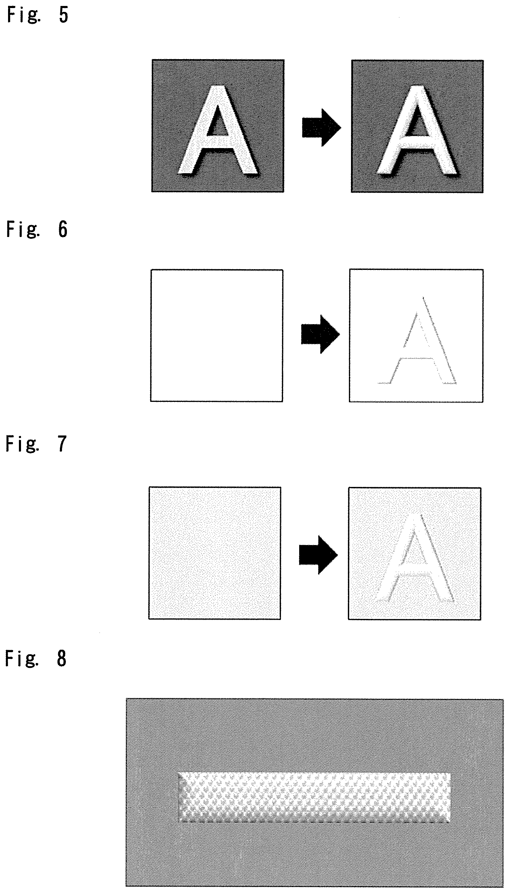

Fig. 1 shows Example 1 where a transparent laminate film having no print layer is used. Apattern (letter "A") is printed on the film with a high-brightness ink containing an aluminum powder, and a protruded portion is formed at the printed pattern. Fig. 2 shows Example 2 where a pattern (letter "A") is printed with a high-brightness ink containing a pearl pigment and a protruded portion is formed at this printed pattern. Fig. 6 shows Comparative Example 1 where the pattern (letter "A") is formed simply as a protruded portion on the laminate film. And Fig. 7 shows Comparative Example 2 where the film is printed with the high-brightness ink containing an aluminum powder, and the pattern (letter "A") is formed simply as a protruded portion. The decorative effects in Examples 1 and 2 are apparently improved in comparison with those in Comparative Examples 1 and 2 where the pattern and the background have no difference in the hue or the like.

Fig. 3 shows Example 3 where the pattern having a metallic luster and the remaining region (background) are different in the brightness, and the pattern region where the protruded portion is to be formed has a relatively bright color. In Example 3, the decorative effect is apparently improved in comparison with the aforementioned Examples shown in Figs. 6 and 7. Moreover, the pattern seems to be more emphasized in comparison with those of Figs. 1 and 2, namely, the decorative effect is further improved.

Fig. 4 shows Example 4 where a laminate film is printed with a high-brightness ink containing an aluminum powder, a shadow is printed in black on assumption that the letter is irradiated with light from diagonally upper left direction, and a protruded portion is formed at the pattern. In Example 4, the decorative effect is apparently improved in comparison with the aforementioned Examples shown in Figs. 6 and 7. Furthermore, the three-dimensionality of the pattern in Fig. 4 seems to be more emphasized in comparison with those in Figs. 1 and 2, indicating that the decorative effect is improved remarkably.

Fig. 5 shows Example 5 where the letter is printed with a high-brightness ink containing an aluminum powder and a shadow is printed in black on the assumption that the letter is irradiated with light from diagonally upper left direction, and further, the background is printed in blue. In Example 5, the decorative effect is apparently improved in comparison with the aforementioned Examples shown in Figs. 6 and 7. The three-dimensionality of the pattern in Fig. 5 seems to be further emphasized in comparison with that in Fig. 3, indicating that the decorative effect is improved remarkably.

Example 6 and Example 9 each relates to a decorative laminate film prepared by using a foamed film. As shown in Figs . 8 and 9, the pattern (one horizontal line) is formed as a protruded portion having a pearly luster derived from the foamed film, while the remaining background is imparted with a print of a dull and matte texture, whereby the pattern having the pearly luster is emphasized further to improve the decorative effect.

### Brief Description of the Drawings:

[Fig. 1] : a view showing an embodiment of a decorative laminate film of the present invention on which a letter is printed with a high-brightness ink containing an aluminum powder, the view consists of the left (A) showing the letter before formation of the protruded portion and the right (B) showing the letter after formation of the protruded portion;
[Fig. 2] : a view showing an embodiment of a decorative laminate film of the present invention on which a letter is printed with a high-brightness ink containing a pearl pigment, the view consists of the left (A) showing the letter before formation of the protruded portion and the right (B) showing the letter after formation of the protruded portion;
[Fig. 3] : a view showing an embodiment of a decorative laminate film of the present invention on which a letter is printed with a high-brightness ink containing an aluminum powder and the background is printed in blue, the view consists of the left (A) showing the letter before formation of the protruded portion and the right (B) showing the letter after formation of the protruded portion;
[Fig. 4] : a view showing an embodiment of a decorative laminate film of the present invention on which a letter is printed with a high-brightness ink containing an aluminum powder and a shadow is printed in black on assumption that the letter is irradiated with light from a diagonally upper left direction, the view consists of the left (A) showing the letter before formation of the protruded portion and the right (B) showing the letter after formation of the protruded portion;
[Fig. 5] : a view showing an embodiment of a decorative laminate film of the present invention on which a letter is printed with a high-brightness ink containing an aluminum powder and a shadow is printed in black on assumption that the letter is irradiated with light from a diagonally upper left direction while the background is printed in blue, the view consists of the left (A) showing the letter before formation of the protruded portion and the right (B) showing the letter after formation of the protruded portion;
[Fig. 6] : a view showing an embodiment of a decorative laminate film of the present invention on which a protruded portion shaped as the letter is formed without printing a pattern, the view consists of the left (A) showing the letter before formation of the protruded portion and the right (B) showing the letter after formation of the protruded portion;
[Fig. 7] : a view showing an embodiment of a decorative laminate film of the present invention, the entire surface is printed with a high-brightness ink containing an aluminum powder and then, the protruded portion shaped as the letter is formed, the view consists of the left (A) showing the letter before formation of the protruded portion and the right (B) showing the letter after formation of the protruded portion;
[Fig. 8]: a view showing the decorative laminate film prepared in Example 6;
[Fig. 9]: a view showing the decorative laminate film prepared in Example 9;
[Fig. 10]: a view showing a cross-sectional structure of an example of laminate film used in production of a decorative laminate film of the present invention;
[Fig. 11] : a view showing a cross-sectional structure of another example of laminate film used in production of a decorative laminate film of the present invention;
[Fig. 12]: a view for explaining a process for shaping a protruded portion of a decorative laminate film of the present invention;
[Fig. 13]: a view showing a cross-sectional structure of a decorative laminate film of the present invention, prepared by forming a protruded portion on the laminate film shown in Fig. 10; and
[Fig. 14]: a view showing a cross-sectional structure of a decorative laminate film of the present invention, prepared by forming a protruded portion on the laminate film shown in Fig. 11.

### Mode for Carrying Out the Invention:

### (Decorative laminate film)

In the present invention, at least a part of the pattern has a metallic luster or a pearly luster, and the luster is imparted by a print layer or a foamed film to be interposed between an inner film and an outer film of a laminate film in use as mentioned below. The print layer comprises a high-brightness ink containing a powder of a metal like aluminum or a pearl pigment. The foamed film is capable of exhibiting a pearly luster. The pattern having the metallic luster and/or the pearly luster and the remaining region are different from each other in at least one of the hue, the brightness, the chroma and the gloss, and the protruded portion is formed along at least a part of the pattern, thereby achieving an excellent decorative effect.

Further in the decorative laminate film of the present invention, the pattern and the region having no pattern are different from each other in the brightness. Since the pattern is formed on a relatively bright region, the pattern is clearly distinguished from the region having no pattern. This generates synergy with the presence of the protruded portion formed along the outline of the pattern to further enhance the three-dimensional effect of the pattern.

For instance, in Fig. 3, the pattern (letter "A") is printed with a high-brightness ink containing an aluminum powder to be imparted with a metallic luster. On the other hand, the remaining background is printed to have a dull and matte texture. In this case, the metallic luster makes the pattern further visible. In addition, the hue and the brightness are different, and the pattern at which the protruded portion is to be formed is imparted with relatively bright color. As a result, the pattern is made further noticeable and the decorative effect is improved in comparison with the case in Fig. 1 where the same letter is printed with the same high-brightness ink.

Further in the decorative laminate film of the present invention, there is a region to be shaded when the protruded portion is irradiated with light from one direction. The region is printed to emphasize the shadow, so that the three-dimensional effect of the pattern can be enhanced further.

Fig. 4 shows a laminate film printed entirely with the high-brightness ink containing an aluminum powder, and a letter is provided thereon. The right side of the letter is partially shaded by printing in black on the assumption that the three-dimensional letter is irradiated with light from the diagonal left direction. Fig. 5 shows the embodiment of Fig. 3, which is provided with a similar shadow in black. In these embodiments, apparently the three-dimensional effect of the letter is remarkably enhanced.

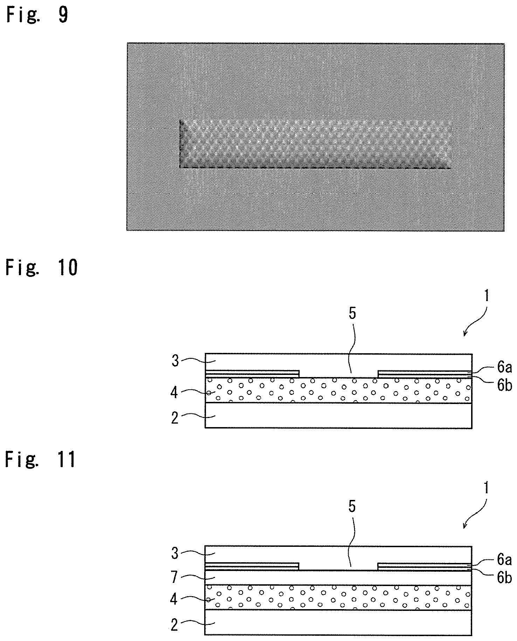

In Figs. 8 and 9, the region of the pattern (horizontal line) has a pearly luster derived from the foamed film, while the background is printed to have a dull matte texture. In these cases, the pearly luster makes the pattern more noticeable. In addition to that, the pattern and the background are different from each other in the hue and the brightness, and the pattern where the protruded portion is to be formed is printed in a relatively bright color, thereby enhancing further the pattern and improving the decorative effect.

In a case of using the decorative laminate film of the present invention as a bag-type container like a pouch or a packaging material like a sealing material, the film is required to have a mechanical strength and a barrier property. It is preferable, therefore, that the main protruded portion has a width of not more than 10 mm, and in particular in a range of 1 to 3 mm, and the height of the protruded portion is not more than 0.35 mm, and in particular in a range of 0.1 to 0.35 mm. In light of this, in a case of forming a large pattern, preferably a part of the pattern such as the outer periphery thereof is rimmed with a protruded portion.

Though not shown, the surface roughness at the protruded portion may be made higher than the surface roughness of the region surrounding the protruded portion, thereby providing a difference in the gloss therebetween. In this manner, the light is scattered on the protruded portion to further emphasize the three-dimensionality of the characters and the figures, and thus, a decorative effect with an excellent design property can be provided.

In the process for protruding the outline of the character, the height of a part of the mold for shaping the inside of the character partitioned with the protruded portion that becomes the outline of the character is adjusted to be higher than a part for shaping the region surrounding the protruded portion and lower than a part for shaping the protruded portion that becomes the outline of the character. Since both the protruded portion and the inside of the character partitioned with the protruded portion on the film can be swollen a little at the same time, the three-dimensional effect of the entire character can be enhanced easily.

As mentioned above, the present invention relates to a decorative laminate film comprising at least an inner film and an outer film, and at least a part of a character and/or a figure is formed as a protruded portion protruding toward the outer film. The present invention is not limited to any of the aforementioned particular embodiments as long as at least a part of the character and/or the figure has a metallic luster derived from a print layer comprising a high-brightness ink and/or a pearly luster derived from a foamed film, and the character and/or the figure is different from the remaining region in at least one of the hue, the brightness, the chroma and the gloss.

For instance, in each of the specific examples shown in Figs. 1-5, the pattern is formed to entirely have a metallic luster and/or a pearly luster. Alternatively, the metallic luster and the pearly luster can be imparted partly so that only a part of the letter appears to glow.

In the specific examples shown in Figs. 1-5, 8 and 9 (excepting Fig. 4), the applied colors are modified in all of the hue, the brightness, and the chroma. Similar effect can be obtained by utilizing gradation and/or blurring to vary the brightness and chroma alone.

In the specific examples shown in Figs. 1-5, 8 and 9, the entire pattern is shaped uniformly as a protruded portion. Alternatively, it is possible to combine the protruded portions different from each other in the width and height.

### (Method for producing decorative laminate film)

In a case where any foamed film is not included, a decorative laminate film of the present invention can be produced as a laminate film comprising an inner film and an outer film sandwiching therebetween a print layer having a character and/or a figure printed with a high-brightness ink, and by shaping a protruded portion thereon.

In a case where a foamed film is included, a decorative laminate film of the present invention can be produced as a laminate film comprising an inner film and an outer film sandwiching therebetween a print layer and a foamed film having a pearly luster, and by shaping a protruded portion thereon. The print layer is provided by printing on the region (background) excepting the character and/or the figure.

### [Laminate film]

From the viewpoint of shaping the protruded portion, the laminate film used for producing the decorative laminate film of the present invention comprises a more stretchable film for the inner film and a less stretchable film for the outer film, and a print layer comprising a high-brightness ink and/or a foamed film having a pearly luster is interposed between the inner film and the outer film.

The more stretchable film used as the inner film is a film including (e.g. formed from) polyethylene or polypropylene, preferably having heat sealability. The less stretchable film used as the outer film is a stretched film including (e.g. of) nylon or polyethylene terephthalate (hereinafter, this may be called "PET") .

Preferably, a pattern is printed on a laminate film by printing in advance on a film constituting the laminate film, and laminating the film with another film. According to this method, it is possible to form a print layer inside the laminate film. As a result, damage on the print layer can be prevented effectively without providing a protective layer like a top coat layer on the print layer. Specifically, it is preferable that the print is imparted on the inner surface of the outer film.

Conventionally known printing methods can be employed for printing, and the examples include gravure printing, flexographic printing, offset printing, inkjet printing, and screen printing. In the decorative film of the present invention, gravure printing and flexographic printing are preferred in particular, since they can be performed at a high speed.

In the present invention, it is possible to use conventionally known high-brightness inks containing high-brightness pigments such as a pearl pigment and a metal powder. Examples of the high-brightness pigment to be contained in the high-brightness ink include oxide-coated micas such as mica titanium, iron oxide-coated mica, iron oxide-coated mica titanium, Prussian blue-coated mica titanium, Prussian blue iron oxide-coated mica titanium, chromium oxide-coated mica titanium, carmine-coated mica titanium, organic pigment-coated mica titanium, titanium oxide-coated mica, and oxidized titanium coated synthetic mica; oxide-coated glass powders such as titanium oxide-coated glass powder, and iron oxide-coated glass powder; oxide-coated metal particles such as titanium oxide-coated aluminum powder; flaky foils of basic lead carbonate, lead hydrogen arsenate, and bismuth oxychloride; pearl pigments such as fish scale, shell fragments, and pearl fragments; and metal pigments such as aluminum powder, gold powder, silver powder, copper powder, bronze powder, zinc powder, stainless steel powder, and nickel powder, though the present invention is not limited to these examples. These pigments can be used alone or in combination of two or more. The average particle diameter of the high-brightness pigment is preferably in the range of 5 to 25 µm from the viewpoint of gloss, dispersibility, coating workability and the like.

When the laminate film does not include a foamed film, specific examples of preferred combinations of films viewed from the inner surface side to the outer surface side are as follows, though the present invention is not limited to these examples.
Polyethylene film / stretched nylon film;
Polyethylene film / stretched nylon film / stretched PET film;
Polyethylene film / stretched PET film / stretched nylon film;
Polypropylene film / stretched nylon film;
Polypropylene film / stretched nylon film / stretched PET film; and
Polypropylene film / stretched PET film / stretched nylon film.

In the laminate film including no foamed film, there is no particular limitation but it is particularly preferable from the viewpoint of shaping the protruded portion that the thickness of the inner film is in a range of 50 to 200 µm and the thickness of the outer film is in a range of 10 to 30 um before shaping the protruded portion, and the inner film has a thickness 3 to 20 times the outer film.

Any additional layer may be formed between the inner film and the outer film or on the outside of the outer film as long as the effect of the present invention is not impaired. For instance, it is possible to form a top coat layer or the like on the outside of the outer film.

In a case of providing a further layer to the laminate film, the total thickness of the laminate film is preferably in a range of 70 to 300 µm.

For the foamed film, any conventionally known foamed film can be used without any particular limitation as long as it is capable of exhibiting a pearly luster.

An example of the foamed film having a pearly luster is proposed by JP 2007-22554 publication, though the present invention is not limited thereto. The film comprises a thermoplastic resin such as polyolefin resin, polyester resin, polyamide nylon resin or the like, which is impregnated with an inert gas such as carbon dioxide and then heated to foam, and stretched. Another example of the foamed film having a pearly luster is proposed by JP 2010-105396 publication. The film is prepared by mixing a polyolefin resin with a foaming mixture containing a foaming agent such as an azo compound, an organic chemical foaming agent, inorganic chemical foaming agent and the like, and heating the film to foam.

When the laminate film has a foamed film, specific examples of preferred combinations of films viewed from the inner surface side to the outer surface side are as follows, though the present invention is not limited to these examples.
Polyethylene film / foamed film / stretched nylon film;
Polyethylene film / foamed film / stretched PET film;
Polyethylene film / foamed film / stretched nylon film / stretched PET film;
Polyethylene film / foamed film / stretched PET film / stretched nylon film;
Polyethylene film / foamed film / stretched PET film / stretched PET film;
Polypropylene film / foamed film / stretched nylon film;
Polypropylene film / foamed film / stretched PET film;
Polypropylene film / foamed film / stretched nylon film / stretched PET film;
Polypropylene film / foamed film / stretched PET film / stretched nylon film; and
Polypropylene film / foamed film / stretched PET film / stretched PET film.

In the laminate film including a foamed film, it is particularly preferable before shaping of the protruded portion that the inner film has a thickness in a range of 10 to 200 µm, the foamed film has a thickness in a range of 50 to 500 µm, the outer film has a thickness in a range of 10 to 30 µm, and the inner film has a thickness 3 to 20 times the thickness of the outer film, though the present invention is not limited to these ranges.

Any additional layer may be formed between the inner film/outer film and the foamed film or on the outside of the outer film as long as the effect of the present invention is not impaired. For instance, it is possible to form a top coat layer or the like on the outside of the outer film.

The laminate film can include a further additional layer.

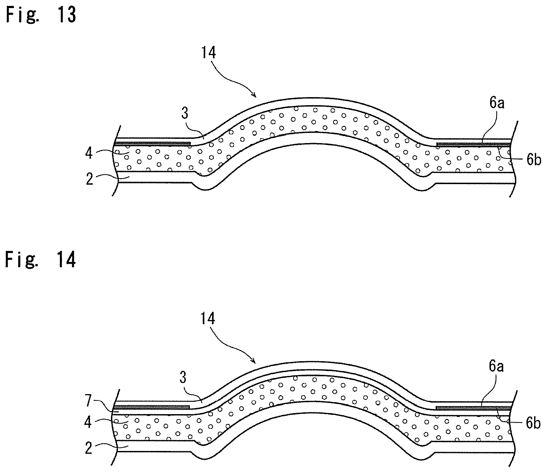

Fig. 10 shows a cross-sectional structure of an example of laminate film provided with a foamed film. The laminate film is used for producing a decorative laminate film of the present invention. In this laminate film 1, a foamed film 4 is interposed between an inner film 2 and an outer film 3. Between the outer film 3 and the foamed film 4, a print region (background) 6 is formed surrounding a pattern region 5 on which a protruded portion is to be formed. The print region 6 is printed differently from the pattern region 5 in the hue or the like. This print region (background) 6 is composed of a surface print layer 6a and a base print layer 6b of a white ink when viewed from the outer film 3 side. Since the base print layer 6b of white ink is provided, the print region 6 is made opaque and the ink color other than white can be exhibited vividly. This serves to differentiate the background clearly from the pattern region 5 in the hue, the brightness, the chroma or the like. As shown in Fig. 13 below, the pattern can be enhanced by forming the protruded portion at the part of the pattern region 5.

In a case of making the content visible from outside, there is no necessity of forming the white base print region 6b in production of a packaging bag using the decorative laminate film of the present invention. It is also possible to provide only the surface print layer 6a to the pattern region 5 to form the protruded portion so as to provide a pearly luster having a different hue, as shown in Example 4 (Fig. 9) described below.

Fig. 11 shows a cross-sectional structure of another example of laminate film used for production of a decorative laminate film of the present invention, and the laminate film is provided with a foamed film. This laminate film 1 is the same as the laminate film shown in Fig. 10, except that an intermediate film 7 is provided on the foamed film 4 facing the outer film. This intermediate film 7 is a less stretchable film just like the outer film. In order to arrive at this embodiment, the print region 6 is printed on the outer film 3, on which the intermediate film 7 is laminated. On the thus obtained laminate film, another laminate film comprising the foamed film 4 and the inner film 2 is further laminated. According to this embodiment, the print region 6 can be protected in lamination with the foamed film 4. Alternatively, it is possible to use a laminate film comprising the foamed film 4 formed as the intermediate layer between the inner film 2 and the intermediate film 7, which is then laminated with the outer film.

Pattern printing on the laminate film provided with the foamed film can be performed similarly to the case of printing to a laminate film that has no foamed film.

In printing on a laminate film having a foamed film, a high-brightness ink containing an aluminum powder, a pearl pigment or the like can be used. The high-brightness ink can improve further the decorative effect in synergy with the pearly luster derived from the foamed film.

### [Process for shaping protruded portion]

For preparing the decorative laminate film of the present invention, the laminate film having the aforementioned pattern is subjected to a three-dimensional shaping of the protruded portion.

There is no particular limitation on the process for shaping the protruded portion as long as a protruded portion protruding toward the outer film can be formed. As described above, however, a laminate film comprising a more stretchable film as an inner film and a less stretchable film as an outer film is used, and it is preferable to shape the laminate film by compressing in a cold, warm or hot process, whereby the protruded portion may protrude toward the outer film.

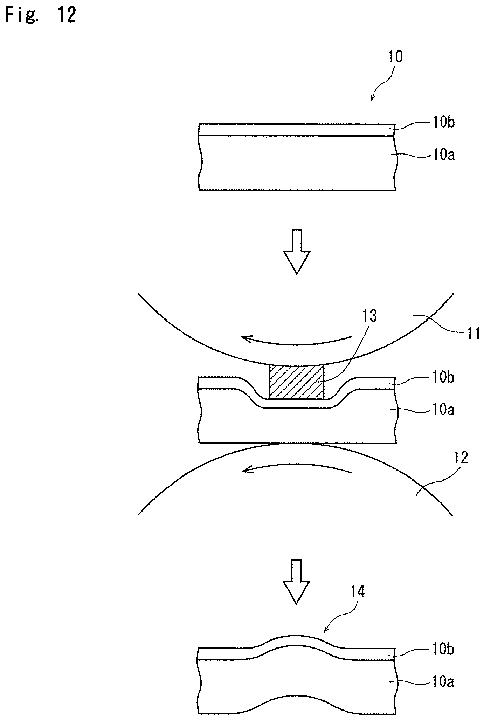

Fig. 12 includes a set of views to explain one example of process for shaping a protruded portion of a decorative laminate film of the present invention. As shown in Fig. 12, a laminate film 10 comprising an inner film 10a and an outer film 10b (foamed film is not shown) is heated to room temperature or approximately the softening point of the inner film 10a. The laminate film is placed between a processing roll 11 having a processing portion 13 and an anvil roll 12. A certain site of the laminate film 10 to make the protruded portion is compressed with the processing portion 13 in the thickness direction, and then, the pressure is relieved so that the compressed site protrudes toward the outer film 10b side, thereby forming a protruded portion 14.

Figs. 13 and 14 are enlarged views showing a cross section of a protruded portion region of the decorative laminate film. Specifically, the laminate film shown in Fig. 10 is used in Fig. 13, and the laminate film shown in Fig. 11 is used in Fig. 14. At the pattern region 5 of each of the laminate films, the protruded portion 14 is formed. The protruded portion is deformed the most in the vicinity of the inside of the edge, where the inner film is stretched greatly and squeezed outward while the outer film is not stretched substantially.

The protruded portion can be shaped in a cold process without heating the processing portion. Alternatively, it can be shaped in a hot process by heating the processing portion approximately to the softening temperature of the inner film or in a warm process by heating the processing portion to a temperature range between those for the cold process and the hot process. For instance, when the inner film is made of polyethylene, a warm process may be conducted by heating the processing portion to a temperature range of 35 to 80°C or a hot process may be conducted by heating the processing portion to a temperature range of 80 to 100°C, and the process may be followed by a cooling process as required.

Here, the height of the protruded portion is determined depending on the compression applied by the processing portion. For instance, in a case of processing between a pair of rolls as shown in Fig. 12, the height is determined depending on the clearance between the processing portion 13 and the anvil roll 12.

In the specific example shown in Fig. 12, shaping by compression is conducted between a pair of rolls including the processing roll 11 having the processing portion 13. This example does not limit the technique but the anvil roll 12 may have a cast at a site corresponding to the processing portion 13. The roll process of compression between a pair of rolls as shown in Fig. 12 may be replaced by a press process. Similarly in this case, the surface to be processed (inner film side) may be flat or a cast surface.

The process for shaping the protruded portion of the decorative laminate film of the present invention can be applied to a long-length laminate film or each piece of decorative laminate films.

### (Bag-type container)

There is no particular limitation on the method for producing the bag-type container of the present invention as long as the bag-type container has the decorative laminate film of the present invention. For instance, the container can be shaped by overlapping the inner films for the decorative laminate film of the present invention. Alternatively, the decorative laminate film of the present invention may be used for one surface while another laminate film having no protruded portion is used for the other surface to make a bag-type container.

In still another example, it is possible to prepare a laminate film comprising at least a more stretchable inner film and a less stretchable outer film and having a pattern printed thereon, and to overlap the inner film to shape a bag-type container, then shaping the protruded portion. Similarly in this case, the protruded portion can be shaped on each piece for a bag-type container. In a further embodiment, a plurality of bag-type containers formed by overlapping long-length laminate films may be arranged continuously like a long-length belt, which is processed consecutively to shape protruded portions, and then cut off to provide respective bag-type containers.

The bag-type container can be employed as any of conventionally known bag-type containers such as a standing pouch, a three-side seal sachet, and a four-side seal sachet, and any of these bag-type containers equipped with a spout.

### (Sealing material)

The sealing material of the present invention can be shaped by punching through the decorative laminate film of the present invention to have a desired shape such as an opening of a cup-shape or tray-shape container.

### Examples:

### (Examples 1 to 5, Comparative Examples 1 and 2)

### 1. Laminate film

A laminate film was produced by dry-lamination of an inner film comprising a linear low density polyethylene film (120 µm), an outer film comprising a stretched polyethylene terephthalate film (12 um) with a letter "A" printed on the inner surface, and a stretched nylon film (15 um) arranged between the inner film and the outer film.

### 2. Formation of protruded portion protruding toward the outer film of the laminate film

The protruded portion was shaped by using a pair of rolls comprising an upper roll provided with a protrusion processing portion. Specifically, the laminate film at room temperature was compressed with this processing portion in the thickness direction in a cold process, whereby a protruded portion having a shape of a letter "A" protruding toward the outer film was formed. The protruded portion had a maximum width (width of the line of the letter) of 5 mm and a maximum height of 0.2 mm.

In formation of the protruded portion shaped as the letter "A", the clearance between the top end of the protrusion processing portion and the lower roll (anvil roll) was set to 60 µm.

### 3. Printing

The print region, namely, the letter or the background, was printed using any of a high-brightness ink containing an aluminum powder (silver), a high-brightness ink containing a pearl pigment (purple) and a blue ink, while the base was printed in white so that it could not be seen through.

### 4. Evaluation

The decorative effect of the protruded portion shaped as the letter "A" protruding toward the outer film of the laminate film was evaluated visually for two viewpoints: three-dimensionality and visibility (discrimination of protruded portion).
[Three-dimensionality]
   ⊚: excellent; ○: fair; ×: poor
[Visibility]
   ⊚: very good; ○: good; ×: poor

The results are shown in Table 1.

### [Example 1]

A letter "A" was printed on the inner surface of the outer film with a high-brightness ink (silver) containing an aluminum powder, while the background was made transparent without any print, thereby forming a protruding portion having a shape of a letter "A" (see Fig. 1).

### [Example 2]

A protruding portion having a shape of a letter "A" was formed in a manner similar to that of Example 1, except that the letter "A" was printed with a high-brightness ink (purple) containing a pearl pigment (see Fig. 2).

### [Example 3]

A protruding portion having a shape of a letter "A" was formed in a manner similar to that of Example 1, except that the background was printed in blue (see Fig. 3).

### [Example 4]

A letter "A" and the background were printed on the inner surface of the outer film with a high-brightness ink (silver) containing an aluminum powder, the outline of the letter "A" was provided with a pattern in black to shade the letter, and the protruded portion of the letter "A" was formed (see Fig. 4) .

### [Example 5]

A letter "A" was printed on the inner surface of the outer film with a high-brightness ink (silver) containing an aluminum powder, the outline of the letter "A" was provided with a pattern in black to shade the letter while the background was printed in blue, and the protruded portion of the letter "A" was formed (see Fig. 5).

### [Comparative Example 1]

A protruding portion having a shape of a letter "A" was formed in a manner similar to that of Example 1, without printing the letter "A" (see Fig. 6).

### [Comparative Example 2]

A protruding portion having a shape of a letter "A" was formed in a manner similar to that of Example 4, without printing the outline of the letter "A" with a pattern in black to shade the letter (see Fig. 7).

**[Table 1]**

| | Print | | | Evaluation | | |
|---|---|---|---|---|---|---|
| | Letter | Shade pattern | Background | Three-dimensional effect | Visibility | Total evaluation |
| Ex.1 | High-brightness ink (silver) | No | Transparent | ○ | ○ | ○ |
| Ex.2 | High-brightness ink (purple) | No | Transparent | ○ | ○ | ○ |
| Ex.3 | High-brightness ink (silver) | No | Blue | ○ | ⊚ | ○ |
| Ex.4 | High-brightness ink (silver) | Yes | High-brightness ink (silver) | ⊚ | ○ | ○ |
| Ex.5 | High-brightness ink (silver) | Yes | Blue | ⊚ | ⊚ | ⊚ |
| Com.Ex.1 | Transparent | No | Transparent | × | × | × |
| Com.Ex.2 | High-brightness ink (silver) | No | High-brightness ink (silver) | × | ○ | × |

| | | | | | | |
|---|---|---|---|---|---|---|
| *Ex.: Example; Com.Ex.: Comparative Example | | | | | | |

### (Example 6 to 9, Comparative Examples 3 to 6)

### 1. Formation of protruded portion protruding toward outer film of laminate film

The protruded portion was shaped by using a pair of rolls for compression in a cold process (a processing roll and an anvil roll), where the processing roll as the upper roll had a protrusion processing portion to compress the laminate film in a thickness direction. The laminate film was fed to the clearance between the rolls in a state where the outer film faced the processing roll and the inner film (sealant film) faced the anvil roll, thereby conducting a compression in a cold process so as to form a protruded portion protruding toward the outer film of the laminate film.

In formation of the protruded portion, the clearance between the tip end of the protrusion processing portion and the lower roll (anvil roll) was set to 60 µm.

### 2. Shape of protrusion processing portion

It was a rectangle with a width (in the direction of processing roll width) of 50 mm, and a length (in the rolling direction of processing roll) of 3 mm.

### 3. Maximum height h of protruded portion

The maximum height h of the protruded portion protruding toward the outer film on the laminate film was measured by using a surface profiler. The maximum height here was taken on the lateral cross section in the rolling direction of the processing roll.

### 4. Evaluation

The decorative effect of the protruded portion protruding toward the outer film of the laminate film was evaluated visually for two viewpoints: pearl texture and visibility (discrimination of the protruded portion).
(1) [Pearl texture]
   ⊚: excellent; ○: fair; ×: poor
(2) [Visibility]
   ⊚: excellent; ○: good; ×: poor

### [Example 6]

A two-layer film was prepared by co-extruding an inner film and a foamed film. The inner film was a linear low density polyethylene film (30 µm) and the foamed film was a low density polyethylene film (90 µm).

For the outer film, a stretched nylon film (15 µm) was prepared. The background on the inner surface other than the protruded portion was printed with indigo blue ink and with a white ink sequentially so as to shield the pearl texture imparted by the foamed film at the background.

Then, the two-layer film comprising the inner film and the foamed film was dry-laminated with the outer film, thereby providing a laminate film composed of the inner film, the foamed film and the outer film.

This laminate film was compressed in a cold process, and a protruded portion having a maximum height h of 0.2 mm was formed to protrude toward the outer film. The pearl texture and the visibility of the protruded portion were visually checked (see Fig. 8).

The results are shown in Table 2.

### [Example 7]

A laminate film comprising an inner film, a foamed film, an intermediate film and an outer film was prepared in a manner similar to that of Example 6, except that a stretched PET film (12 µm) as the outer film and a stretched nylon film (15 µm) as the intermediate film were dry-laminated.

A protruded portion was formed similarly, and the pearl texture and visibility of the protruded portion were checked visually.

The results are shown in Table 2.

### [Example 8]

A laminate film comprising an inner film, a foamed film, an intermediate film and an outer film was prepared in a manner similar to that of Example 7, except that a stretched nylon film (15 µm) as the outer film and a stretched PET film (12 µm) as the intermediate film were dry-laminated.

A protruded portion was formed similarly, and the pearl texture and visibility of the protruded portion were checked visually.

The results are shown in Table 2.

### [Example 9]

A laminate film was prepared in a manner similar to that of Example 7, except that a region for forming the protruded portion on the inner surface of the outer film was printed with yellow ink. The protruded portion was formed similarly, and the pearl texture and visibility of the protruded portion were checked visually (see Fig. 9).

The results are shown in Table 2.

### [Comparative Example 3]

A laminate film was prepared in a manner similar to that of Example 6, except that the laminate film comprised an inner film and an outer film but no foamed film. The laminate film was similarly compressed in a cold process to form a protruded portion protruding toward the outer film. The pearl texture and the visibility of the protruded portion were checked visually.

The results are shown in Table 2.

### [Comparative Example 4]

A laminate film was prepared in a manner similar to that of Example 6, except that print was not provided to the background other than the protruded portion on the inner surface of the outer film. The laminate film was compressed similarly in a cold process to form a protruded portion protruding toward the outer film. Then, the pearl texture and the visibility of the protruded portion were checked visually.

The results are shown in Table 2.

### [Comparative Example 5]

A laminate film was prepared in a manner similar to that of Example 7, except that the laminate film comprised an inner film, an intermediate film and an outer film, while the laminate film included no foamed film. The laminate film was compressed similarly in a cold process to form a protruded portion protruding toward the outer film. Then, the pearl texture and the visibility of the protruded portion were checked visually.

The results are shown in Table 2.

### [Comparative Example 6]

A laminate film was prepared in a manner similar to that of Example 7, except that print was not provided to the background other than the protruded portion on the inner surface of the outer film. The laminate film was compressed similarly in a cold process to form a protruded portion protruding toward the outer film. Then, the pearl texture and the visibility of the protruded portion were checked visually.

The results are shown in Table 2.

**[Table 2]**

| | Foamed layer | Print | | Evaluation | | |
|---|---|---|---|---|---|---|
| | | Background | Protruded portion | Pearl texture | Visibility | Total evaluation |
| Ex.6 | Yes | Yes | No | ⊚ | ○ | ○ |
| Ex.7 | Yes | Yes | No | ⊚ | ○ | ○ |
| Ex.8 | Yes | Yes | No | ⊚ | ○ | ○ |
| Ex.9 | Yes | Yes | Yes | ⊚ | ⊚ | ⊚ |
| Com.Ex.3 | No | Yes | No | × | ○ | × |
| Com.Ex.4 | Yes | No | No | ○ | × | × |
| Com.Ex.5 | No | Yes | No | × | ○ | × |
| Com.Ex.6 | Yes | No | No | ○ | × | × |

| | | | | | | |
|---|---|---|---|---|---|---|
| *Ex.: Example; Com.Ex.: Comparative Example | | | | | | |

The above Examples, Comparative Examples, Tables 1 and 2 demonstrate that the decorative laminate film of the present invention has an excellent appearance.

### Explanations of Letters or Numerals:

- 1: laminate film
- 2: inner film
- 3: outer film
- 4: foamed film
- 5: pattern region
- 6: print region
- 10: laminate film
- 11: processing roll
- 12: anvil roll
- 13: processing portion
- 14: protruded portion

## Claims

1. A decorative laminate film including at least an inner film and an outer film and having a character and/or a figure at least a part of which is formed as a protruded portion protruding toward the outer film, wherein:
the inner film of the laminate film includes polyethylene or polypropylene, and the outer film includes stretched nylon or stretched polyethylene terephthalate;
between the inner film and the outer film, the decorative laminate film has a print layer including a high-brightness ink and/or a foamed film having a pearly luster;
at least a part of the character and/or the figure has a metallic luster derived from the print layer including the high-brightness ink or a pearly luster derived from the foamed film,
the character and/or the figure is different from at least a part of a remaining region in at least one of hue, brightness, chroma and gloss, and
the protruded portion is formed along at least a part of the character and/or the figure.

2. The decorative laminate film according to claim 1, wherein the character and/or the figure has a contrast to the remaining region and the protruded portion is formed on a relatively bright region.

3. The decorative laminate film according to claim 1 or 2, wherein a region to be shaded in irradiation of the protruded portion with light from one direction is printed to emphasize a shadow.

4. The decorative laminate film according to any one of claims 1 to 3, wherein the protruded portion is formed along an outline of the character and/or the figure.

5. The decorative laminate film according to any one of claims 1 to 4, wherein the print layer including the high-brightness ink includes a high-brightness ink containing an aluminum powder or a high-brightness ink containing a pearl pigment.

6. The decorative laminate film according to any one of claims 1 to 5, wherein the foamed film is a thermoplastic resin film impregnated with an inert gas, heated and stretched.

7. The decorative laminate film according to any one of claims 1 to 6, wherein the protruded portion has a height in a range of 0.1 to 0.35 mm and a width of not more than 10 mm.

8. The decorative laminate film according to any one of claims 1 to 8, wherein the protruded portion is formed by compressing the laminate film in a cold, warm or hot process to allow a region of the laminate film to protrude toward the outer film.

9. The decorative laminate film according to any one of claims 1 to 8, wherein the inner film stretches more than the outer film in a vicinity of inside of an edge of the protruded portion.

10. A bag-type container including the decorative laminate film according to any one of claims 1 to 9.

11. A sealing material including the decorative laminate film according to any one of claims 1 to 9.

## Patentansprüche

1. Dekorative Laminatfolie, die mindestens eine innere Folie und eine äußere Folie enthält und ein Zeichen und/oder eine Figur aufweist, von der mindestens ein Teil als vorstehender Abschnitt gebildet ist, der in Richtung der äußeren Folie vorsteht, wobei:
die innere Folie der Laminatfolie Polyethylen oder Polypropylen enthält, und die äußere Folie gestrecktes Nylon oder gestrecktes Polyethylenterephthalat enthält;
die dekorative Laminatfolie zwischen der inneren Folie und der äußeren Folie eine Druckschicht aufweist, die eine hochglänzende Tinte und/oder eine geschäumte Folie mit Perlglanz enthält;
mindestens ein Teil des Zeichens und/oder der Figur einen Metallglanz aufweist, der von der Druckschicht mit der hochglänzenden Tinte oder dem Perlglanz der geschäumten Folie stammt,
das Zeichen und/oder die Figur sich von mindestens einem Teil des übrigen Bereichs in mindestens einem von Farbton, Helligkeit, Chroma und Glanz unterscheidet, und
der vorstehende Abschnitt entlang mindestens eines Teils des Zeichens und/oder der Figur gebildet ist.

2. Dekorative Laminatfolie nach Anspruch 1, wobei das Zeichen und/oder die Figur einen Kontrast zu dem übrigen Bereich aufweist und der vorstehende Abschnitt auf einem relativ hellen Bereich gebildet ist.

3. Dekorative Laminatfolie nach Anspruch 1 oder 2, wobei der Bereich, der bei der Bestrahlung des hervorstehenden Teils mit Licht aus einer Richtung schattiert werden soll, zur Betonung des Schattens bedruckt wird.

4. Dekorative Laminatfolie nach einem der Ansprüche 1 bis 3, wobei der vorstehende Bereich entlang einer Kontur des Zeichens und/oder der Figur gebildet ist.

5. Dekorative Laminatfolie nach einem der Ansprüche 1 bis 4, wobei die Druckschicht, die die Tinte mit hoher Helligkeit enthält, Tinte mit hoher Helligkeit, die ein Aluminiumpulver umfasst, oder Tinte mit hoher Helligkeit, die Perlpigment umfasst, enthält.

6. Dekorative Laminatfolie nach einem der Ansprüche 1 bis 5, wobei die geschäumte Folie eine mit einem Inertgas imprägnierte thermoplastische Harzfolie ist, die erhitzt wird.

7. Dekorative Laminatfolie nach einem der Ansprüche 1 bis 6, wobei der vorstehende Abschnitt eine Höhe im Bereich von 0,1 bis 0,35 mm und eine Breite von nicht mehr als 10 mm aufweist.

8. Dekorative Laminatfolie nach einem der Ansprüche 1 bis 8, wobei der vorstehende Abschnitt durch Komprimieren der Laminatfolie in einem kalten, warmen oder heißen Verfahren gebildet wird, um einen Bereich der Laminatfolie in Richtung der äußeren Folie vorstehen zu lassen.

9. Dekorative Laminatfolie nach einem der Ansprüche 1 bis 8, wobei sich die innere Folie in der Nähe der Innenseite einer Kante des vorstehenden Abschnitts stärker dehnt als die äußere Folie.

10. Beutelartiger Behälter, der die dekorative Laminatfolie nach einem der Ansprüche 1 bis 9 enthält.

11. Dichtungsmaterial, das die dekorative Laminatfolie nach einem der Ansprüche 1 bis 9 enthält.

## Revendications

1. Film stratifié décoratif comprenant au moins un film interne et un film externe et ayant un caractère et/ou un chiffre dont au moins une partie est formée comme une partie en saillie faisant saillie vers le film externe, dans lequel :
le film interne du film stratifié comprend du polyéthylène ou du polypropylène, et le film externe comprend du nylon étiré ou du téréphtalate de polyéthylène étiré ;
entre le film interne et le film externe, le film stratifié décoratif a une couche d'impression comprenant une encre à brillance élevée et/ou un film expansé ayant un lustre nacré ;
au moins une partie du caractère et/ou du chiffre a un lustre métallique dérivé de la couche d'impression comprenant l'encre à brillance élevée ou un lustre nacré dérivé du film expansé,
le caractère et/ou le chiffre est différent par rapport à au moins une partie d'une région restante en ce qui concerne au moins l'une parmi la teinte, la brillance, la saturation et la luminosité, et
la partie en saillie est formée le long d'au moins une partie du caractère et/ou du chiffre.

2. Film stratifié décoratif selon la revendication 1, dans lequel le caractère et/ou le chiffre présente un contraste avec la région restante et la partie en saillie est formée sur une région relativement brillante.

3. Film stratifié décoratif selon la revendication 1 ou 2, dans lequel une région à ombrager lors de l'irradiation de la partie en saillie avec de la lumière provenant d'une direction est imprimée pour accentuer une ombre.

4. Film stratifié décoratif selon l'une quelconque des revendications 1 à 3, dans lequel la partie en saillie est formée le long d'un contour du caractère et/ou du chiffre.

5. Film stratifié décoratif selon l'une quelconque des revendications 1 à 4, dans lequel la couche d'impression comprenant l'encre à brillance élevée comprend une encre à brillance élevée contenant une poudre d'aluminium ou une encre à brillance élevée contenant un pigment nacré.

6. Film stratifié décoratif selon l'une quelconque des revendications 1 à 5, dans lequel le film expansé est un film de résine thermoplastique imprégné d'un gaz inerte, chauffé et étiré.

7. Film stratifié décoratif selon l'une quelconque des revendications 1 à 6, dans lequel la partie en saillie a une hauteur dans une plage de 0,1 à 0,35 mm et une largeur ne dépassant pas 10 mm.

8. Film stratifié décoratif selon l'une quelconque des revendications 1 à 8, dans lequel la partie en saillie est formée en comprimant le film stratifié dans un processus froid, tiède ou chaud pour permettre à une région du film stratifié de faire saillie vers le film externe,

9. Film stratifié décoratif selon l'une quelconque des revendications 1 à 8, dans lequel le film interne s'étire plus que le film externe au voisinage de l'intérieur d'un bord de la partie en saillie.

10. Récipient de type sac comprenant le film stratifié décoratif selon l'une quelconque des revendications 1 à 9.

11. Matériau d'étanchéité comprenant le film stratifié décoratif selon l'une quelconque des revendications 1 à 9.
